Europäisches Patentamt

European Patent Office

Office européen des brevets

(19)

(11) Veröffentlichungsnummer: **0 173 929**
A2

(12) **EUROPÄISCHE PATENTANMELDUNG**

(21) Anmeldenummer: **85110637.7**

(22) Anmeldetag: **23.08.85**

(51) Int. Cl.⁴: **E 06 B 9/06**

(30) Priorität: **01.09.84 DE 3432277**

(43) Veröffentlichungstag der Anmeldung:
**12.03.86 Patentblatt 86/11**

(84) Benannte Vertragsstaaten:
**AT BE CH DE FR GB IT LI LU NL SE**

(71) Anmelder: **Alten, Kurt**
**Ringstrasse 14**
**D-3015 Wennigsen(DE)**

(72) Erfinder: **Alten, Kurt**
**Ringstrasse 14**
**D-3015 Wennigsen(DE)**

(74) Vertreter: **Depmeyer, Lothar**
**Auf der Höchte 30**
**D-3008 Garbsen 1(DE)**

(54) **Verformbare Dichtung des Spaltes zwischen dem Rand einer Gebäudeöffnung und dem Heck eines Fahrzeuges.**

(57) Die Erfindung geht von solchen Dichtungen der obigen Art aus, die Schürzen einander parallelen Streifen haben. Um diese Dichtungen einfacher herstellen und die in grösserer Anzahl erforderlichen Streifen einfacher montieren zu können, werden aufgrund der Erfindung für die Schürze durchgehende Platten aus Gummi od. dgl. verwendet, die zur Bildung der Streifen mit einer Vielzahl einander paralleler, von einem Rand ausgehender Schnitte versehen sind, die im Abstand vom äusseren Rand der Platte enden.

Fig. 1

EP 0 173 929 A2

1

Verformbare Dichtung des Spaltes zwischen dem Rand einer Gebäudeöffnung und dem Heck eines Fahrzeuges

Die Erfindung betrifft eine verformbare Dichtung des Spaltes zwischen dem Rand einer Gebäudeöffnung und dem Heck eines an diese herangefahrenen Fahrzeuges mit einer Schürze, die seitlich und oben an einem starren , im Abstand vom Gebäude befindlichen, unten offenen Rahmen befestigt ist, wobei die Schürze aus einander parallelen Streifen besteht, die senkrecht in Bezug auf den zu ihrer Befestigung dienenden Steg bzw. Schenkel des u-förmigen Rahmens verlaufen.

Bei den bekannten Dichtungen dieser Art sind die Streifen – aus Gummi od. dgl. bestehend – einzeln eingespannt und so befestigt, was besondere Verklemmungen und Einspannungen erfordert.

Der Erfindung liegt im wesentlichen die Aufgabe zugrunde, die obigen Dichtungen so zu verbessern, dass die Herstellung und die Befestigung der Schürze vereinfacht und beschleunigt werden.

Zur Lösung dieser Aufgabe besteht die Schürze bzw. ihre senkrechten und/oder ihr waagrechter Abschnitt aus einer durchgehenden Platte aus Gummi od. dgl., die zur Bildung der Streifen mit einer Vielzahl einander paralleler, von einem Rand ausgehender Schnitte

- 2 -

0173929

versehen ist, die im Abstand vom äusseren Rand der Platte enden.

Dabei werden die Streifen von den zwischen den Einschnitten befindlichen Teilen der Platte gebildet, während der nicht eingeschnittene, äussere Rand der Platte der Befestigung bzw. Anbringung der Schürzenteile dient. Dabei können in dem äusseren Rand kleine Durchbrechungen vorgesehen sein, um hier angeordnete, meist kugelförmige Sperrkörper zur Befestigung benutzen zu können. Diese Sperrkörper werden in hinterschnittene Profile eingeführt ( zusammen mit dem Rand der Schürzenteile ), wodurch eine einfache und sichere Befestigung geschehen kann.

Es ist auch möglich, die Schürzen-abschnitte aus zwei übereinanderliegenden Platten zusammenzusetzen und die erwähnten Einschnitte gegeneinander zu versetzen, damit entsprechend gegeneinander versetzte Streifen am inneren Rand der Platte entstehen. Vorzugsweise überragt dabei aber eine Platte die andere, um einen dünnwandigen Abschnitt für die erwähnten Durchbrechungen zur Aufnahme der Sperrkörper zu bilden.

Weitere Einzelheiten der Erfindung werden anhand der Zeichnung erläutert, in der Ausführungsbeispiele der Erfindung dargestellt sind.

Es zeigen :

Fig. 1 eine Dichtung am Rand einer Gebäudeöffnung in schaubildlicher Darstellung,

Fig. 2 einen Schnitt durch den oberen Teil der Schürze nach der Linie II - II von Fig. 1,

Fig. 3 den oberen Teil der Schürze gemäss Fig. 2

- 3 -

in der Teilansicht und

Fig. 4 eine Teilansicht des oberen Schürzenteils
in abgewandelter Ausbildung.

Das Gebäude 1 hat eine Öffnung 2, an die Fahrzeuge
mit dem Heck voran zum Be- und Entladen herangefahren
werden. Zu beiden Seiten der Öffnung 2 befindet sich eine
senkrecht verlaufende Bespannung 3 und darüber in
waagerechter Anordnung eine Querbespannung 4. Diese
Bespannungen stellen vom Gebäude 1      eine Verbindung her zu einer Schürze mit einem senkrechten Abschnitt 5 zu beiden Seiten der Öffnung 2 und einem
waagerechten oberen Abschnitt 6. Dabei bestehen die
Teile 3 - 6 aus einer wasserdichten, biegsamen Folie,
also einer dünnwandigen, verformbaren Platte.

Die Öffnung 2 ist von einem u-förmigen Rahmen umschlossen, der von senkrechten Schenkeln 7 und einem
Steg 8 gebildet ist. Diese als Metallprofile ausgeführten Teile sind fest mit dem Gebäude 1 verbunden und
dienen der Befestigung der Ränder der Bespannung 3
und der Querbespannung 4. Die von dem Gebäude 1 abgekehrten Ränder  der Bespannung 3, 4 stehen mit einem
weiteren u-förmigen Rahmen  in fester Verbindung, der
aus senkrechten Metallprofilen 9  und einem waagerechten Profil 1o besteht.

Wichtig ist noch, dass die Metallprofile 1o an schräg
anstehenden Lenkern 11 gehalten sind.

Fährt nun ein Fahrzeug an die Öffnung 2 heran, also
in Richtung des Pfeiles 12, so können sich die Abschnitte
5, 6 verformen. Zugleich kann auch der vordere u-förmige
Rahmen eine Ausweichbewegung in Richtung des Pfeiles  12
ausführen.

0173929

Um ein gutes Anschmiegen der Abschnitte 5, 6 an die
Gestalt des Fahrzeuges sicherzustellen, werden für
diese Abschnitte dünne Platten 13, 14 verwendet, die
je an ihrem der Öffnung 3 zugekehrten Rand geschlitzt
sind. Die Schlitze 15 sind dabei so lang, dass sie etwa
80 % der Breite der Platten 13, 14 durchsetzen unter
Beibehaltung eines durchgehenden, nicht geschlitzten
Randes 16, der dem u-förmigen Rahmen zugekehrt wird
und dort zur Verankerung der Abschnitte 5, 6 dient.

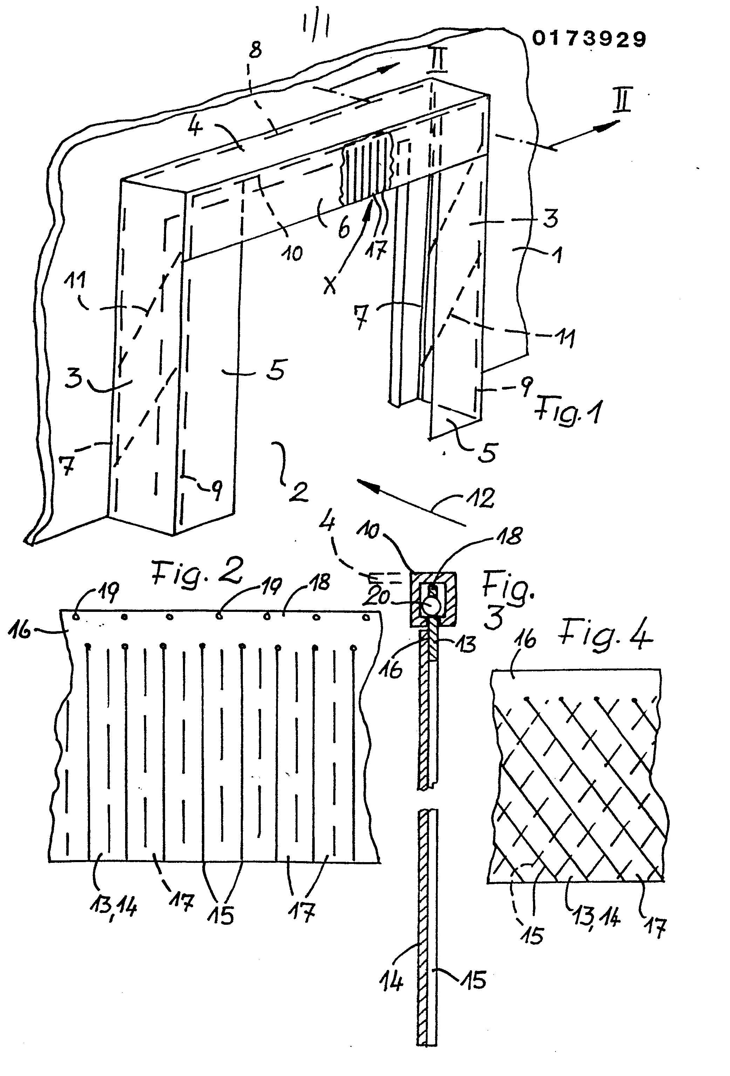

In Fig. 1 sind die Schlitze 15 nur bei x angedeutet.
In Wirklichkeit durchsetzen sie die Platten 13, 14 auf
ihrer gesamten Längenerstreckung.

Durch die Schlitze 15 werden schmale Streifen 17 gebildet, die durch gegeneinander versetzte Schlitze 15 in den
beiden Platten 13, 14 ebenso gegeneinander versetzte
( um 5o % der Schlitzbreite ) Streifen 17 entstehen lassen.

Eine der beiden Platten 13, 14 steht gegenüber der anderen
vor. In diesem dünneren Randstreifen 18 befinden im
Abstand voneinander angeordnete Löcher 19 zur Aufnahme
von Kugeln 2o. Der so bestückte Randstreifen 18 dient
der Befestigung der Abschnitte 5, 6 durch Einführen in
die etwa c-förmigen Profile 9, 1o.

Es versteht sich, dass die aufeinander liegenden Teile
der beiden Platten 13, 14 zweckmässigerweise durch
Kleben od. dgl. haftend miteinander verbunden werden,
um einen Zusammenhalt dieser Teile zu gewährleisten.

Die Schlitze 15 verlaufen bei dem Abschnitt 6 senkrecht,
bei den Abschnitten 5 hingegen waagerecht.

Diese Ausbildung der Dichtung erlaubt eine gute Verformbarkeit der Schürze und zugleich eine schnelle, sichere
Befestigung ihrer Abschnitte 5, 6.

Um im Gegensatz zur Ausführung gemäss Fig. 1 - 3 eine Steigerung der gegenseitigen Halterung und Stützung
der übereinanderliegenden Streifen 17 herbeizuführen,
verlaufen bei der Ausführung gemäss Fig. 4 die Schlitze 15
schräg z.B. unter einem Winkel von etwa 45 $^O$ zu den
Profilen 9, 1o jedoch mit der Massgabe, dass die
Schlitze 15 bzw. Streifen 17 der beiden Platten 13, 14
symmetrisch einander kreuzen.

Es versteht sich, dass die beiden Platten 13, 14 nur
im Bereich des Randes 16 haftend miteinander verbunden
sind; in den übrigen Bereich können sich die Streifen 17
beider Platten unabhängig von einander verbiegen.

Ansprüche


1. Verformbare Dichtung des Spaltes zwischen dem Rand einer Gebäudeöffnung und dem Heck eines an diese herangefahrenen Fahrzeuges mit einer Schürze, die seitlich und oben an einem starren, im Abstand vom Gebäude befindlichen, unten offenen Rahmen befestigt ist, wobei die Schürze aus einander parallelen Streifen besteht bzw. diese aufweisen kann, die senkrecht in Bezug auf den zu ihrer Befestigung dienenden Steg bzw. Schenkel des u-förmigen Rahmens verlaufen, dadurch gekennzeichnet, dass die Teile der Schürze (5,6) aus einer durchgehenden Platte aus Gummi od.dgl. bestehen, die zur Bildung der Streifen (17) mit einer Vielzahl einander paralleler, von einem Rand ausgehender Schnitte (15) versehen sind, die im Abstand vom äusseren Rand der Platte enden.


2. Dichtung nach Anspruch 1, dadurch gekennzeichnet, dass die Schnitte (15) etwa 8o % der Breite der Platten durchsetzen.


3. Dichtung nach Anspruch 1, dadurch gekennzeichnet, dass die Platten am äusseren Rand mit Durchbrechungen ( 19 ) zur Aufnahme von Sperrkörpern (2o) versehen sind und in ein etwa c-förmiges Profil (1o) hineinragen, wobei sich die Sperrkörper innerhalb des Profils befinden.


4. Dichtung nach Anspruch 1, dadurch gekennzeichnet, dass die Platten (5,6) gedoppelt sind und die beiden Bestandteile (13,14) im Bereich ihres äusseren Randes haftend miteinander verbunden sind, wobei die Schnitte (15) der beiden Bestandteile vorzugsweise um eine halbe Einschneideteilung gegeneinander versetzt sind.

0173929

5. Dichtung nach Anspruch 3 und 4, dadurch gekennzeichnet, dass ein Bestandteil am inneren Rand den anderen überragt und dass die Durchbrechungen in dem überstehenden Rand angeordnet sind.

6. Dichtung nach Anspruch 1, dadurch gekennzeichnet, dass sich die Schnitte (15) der beiden Bestandteile (13,14) vorzugsweise symmetrisch kreuzen, wobei die Schnitte etwa 45° mit den Rändern der Bestandteile bilden können.

0173929

Fig. 1

Fig. 2

Fig. 3

Fig. 4